# EUROPEAN PATENT SPECIFICATION

(11) **EP 3 012 130 B1**
(45) Date of publication and mention of the grant of the patent: **27.02.2019**
(21) Application number: 15187201.7
(22) Date of filing: 28.09.2015
(51) Int. Cl.: B60D 1/62, B60D 1/46, B60D 1/06, A01B 59/06, B60D 1/24, B60D 1/66, A01B 59/042

(54) **COUPLER ASSEMBLY FOR COUPLING AN IMPLEMENT TO A VEHICLE**
KUPPLUNGSANORDNUNG ZUR BEFESTIGUNG EINER GERÄTES AN EINEM FAHRZEUG
ENSEMBLE COUPLEUR DESTINÉ À COUPLER UN OUTIL SUR UN VÉHICULE

(30) Priority: 22.10.2014 US 201414521049
(43) Date of publication of application: 27.04.2016
(73) Proprietor: Deere & Company, Moline, IL 61265 (US)
(72) Inventor: Huegerich, Tony J, Cedar Falls, IA Iowa 50613 (US)
(74) Representative: Dehnhardt, Florian Christopher

(56) References cited:
- WO-A1-89/01418
- US-A- 4 131 295

## Description

A tractor or utility vehicle used for agricultural work may be coupled to an implement which has electrical couplers, hydraulic couplers and/or a PTO (power take-off) which must be connected to tractor couplers and to a tractor PTO. Implements are not utilized full time with a tractor, so it is desirable that a coupling mechanism allow quick, easy connecting and disconnecting of the implement. With a manually operated implement coupling assembly, the implement coupler is normally supported at a desired height by a jack stand which is set and removed manually. It is desired to provide a tractor-implement coupler assembly with a jack stand which can be automatically set and removed without the operator having to leave the tractor cab.

These and other objects are achieved by the present invention, wherein a coupler assembly for coupling an implement to a vehicle is provided. The coupler assembly comprises a pickup hitch with an hollow inner housing which is pivotal about a horizontal axis and a drawbar which is slidably received in the hollow inner housing. An implement coupler has a coupler frame adapted to be attached to the implement. A jack stand member is movably mounted on the coupler frame. A stop block is mounted to the pickup hitch. The stop block engages a first forward facing shoulder of the jack stand member to raise the jack stand member from a ground engaging lowered position when the coupler frame is moved towards the vehicle. The stop block is spaced apart from the jack stand member to allow the jack stand member to fall to its lowered position when the coupler frame is moved away from the vehicle into an uncoupled position. The jack stand member in its lowered position releasably supports the coupler frame in a raised position above the ground, ,wherein first and second support bolts project from a side of the coupler frame, the first support bolt being spaced apart forwardly from the second support bolt, and the jack stand member having a first slot which slidably and rotatably receives the first support bolt and a second slot which slidably receives the second support bolt, the jack stand member being pivotal about the first support pin.

Us4131295 discloses a hitch according to the preamble of claim 1. For a complete understanding of the objects, techniques, and structure of the invention reference should be made to the following detailed description and accompanying drawings:
- Fig. 1: is a perspective view of a coupling assembly for for coupling an implement to a vehicle embodying the invention,
- Fig. 2: is a perspective view of a tractor coupler being part of the coupling assembly of Fig. 1,
- Fig. 3: is a perspective exploded view of the tractor coupler of Fig. 2,
- Fig. 4: is a perspective view of an implement coupler being part of the coupling assembly of Fig. 1,
- Fig. 5: is a bottom perspective view of a portion of the coupler assembly of Fig. 1 with components and parts of components removed for clarity,
- Fig. 6: is a side view of a jack stand member being part of the implement coupler of Fig. 4,
- Fig. 7: is a perspective view of the coupler assembly of Fig. 1, with a jack stand member in a lowered position,
- Fig. 8: is a perspective view of the coupler assembly of Fig. 1, with a jack stand member beginning to be raised from its lowered position,
- Fig. 9: is a perspective view of the coupler assembly of Fig. 1, with a jack stand member in a further raised position,
- Fig. 10: is a perspective view of the coupler assembly of Fig. 1, with a jack stand member in a fully raised position, and
- Fig. 11: is a perspective view of the coupler assembly of Fig. 1, with a jack stand member in a secured fully raised position.

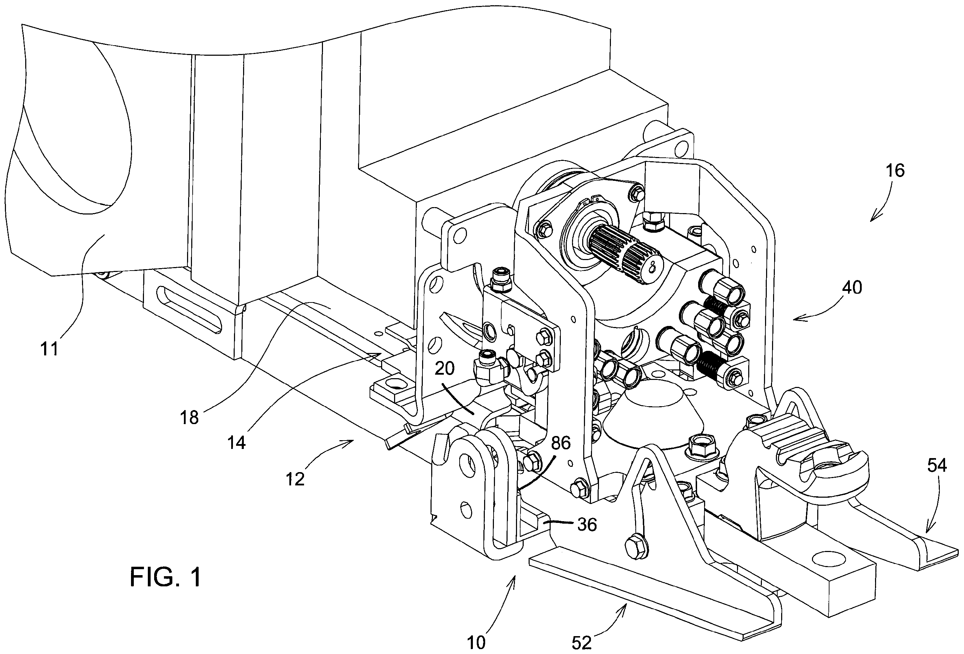

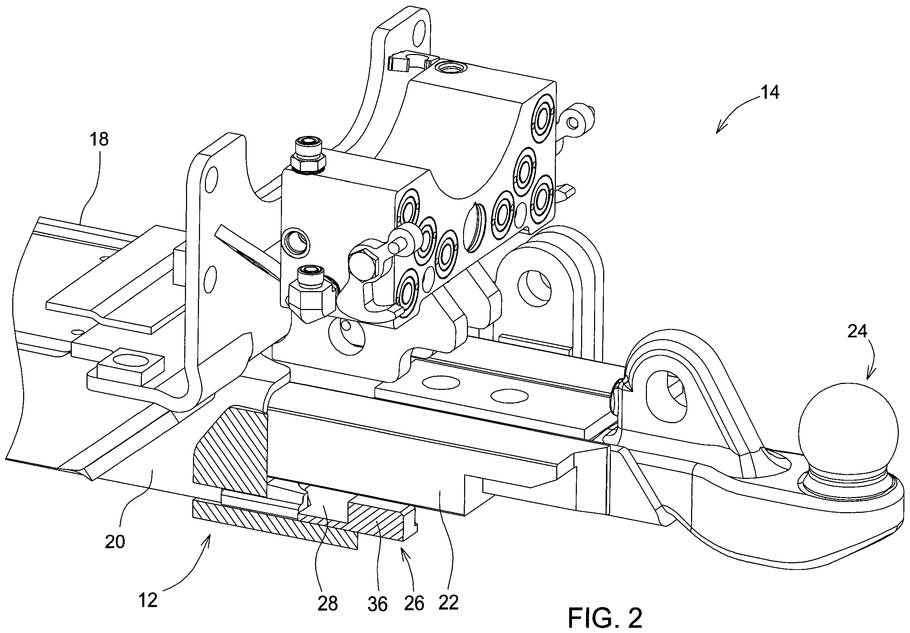

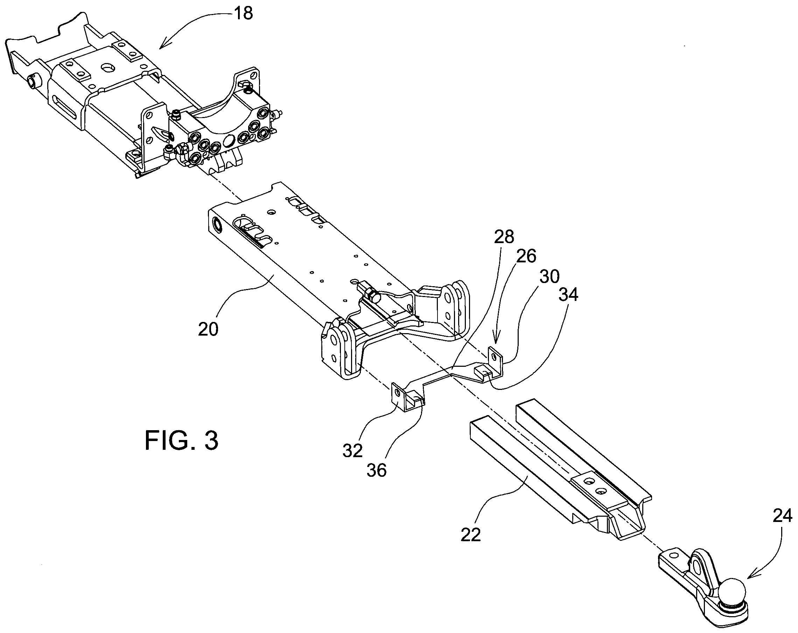

Referring to Figs. 1, 2 and 3, a coupler assembly 10 couples an implement to a vehicle or agricultural tractor which has a pick up hitch 12. The pickup hitch 12 is mounted to a rear vehicle housing 11. The coupler assembly 10 includes a tractor coupler 14 and an implement coupler 16. The tractor coupler 12 is mounted on a hollow outer housing 18 of the pickup hitch 12. The pickup hitch 12 has a hollow inner housing 20 which is pivotally coupled to a front portion of the hollow outer housing 18 about a transverse horizontal axis. A drawbar 22 is slidably received in the hollow inner housing 20 and a hydraulic cylinder (not shown) extends and retracts the drawbar 22. The drawbar 22 supports a hitch ball 24. A stop member 26 is mounted to the rear end of hollow inner housing 20. The stop member 26 has a base 28, left and right side plates 30 and 32, and block-shaped left and right stop blocks 34 and 36. The left and right stop blocks 34 and 36 are placed on the upper surface of the base 28, each adjacent a corresponding one of the left and right side plates 30 and 32.

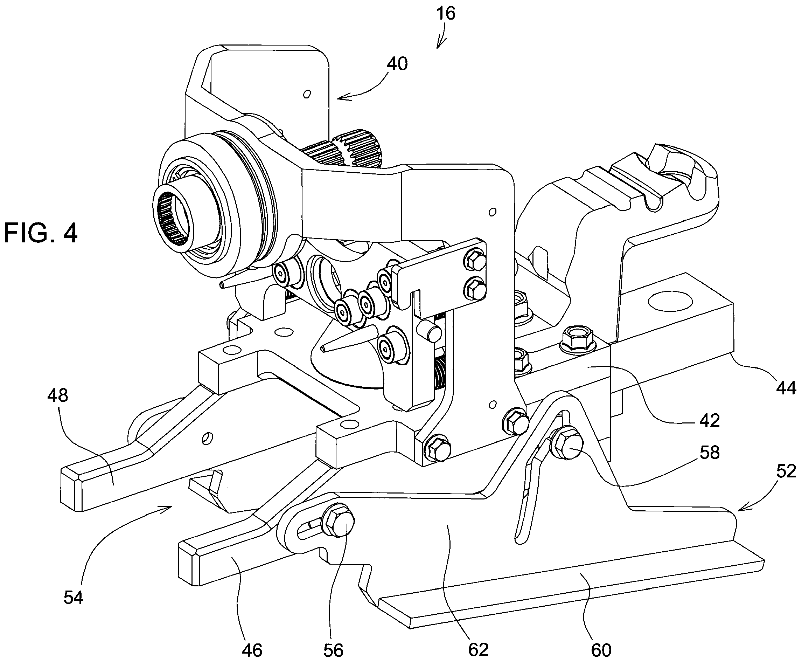

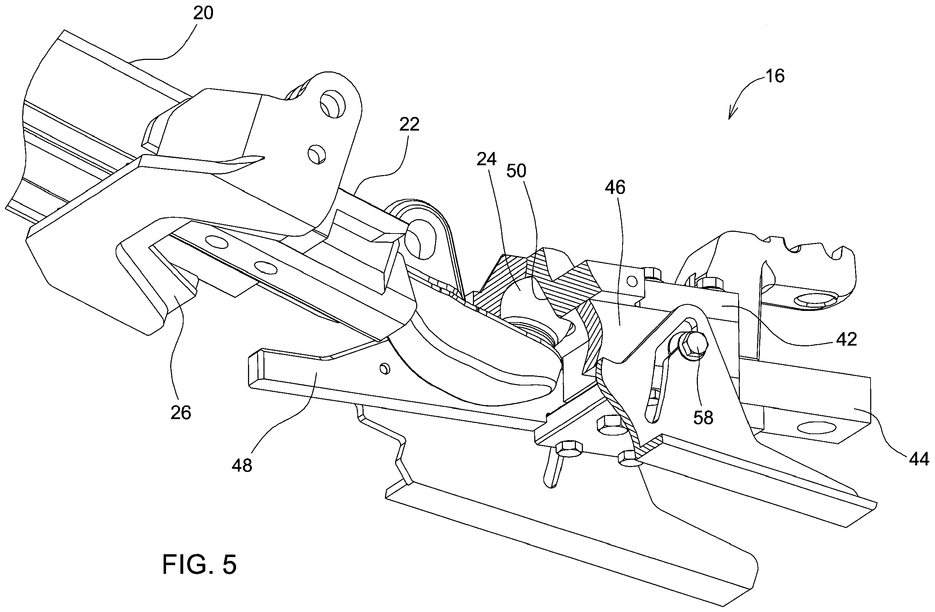

Referring to Figs. 4 and 5, the implement coupler 16 includes a coupler frame 40 which is attached to a base 42. The base 42 is attached to an implement tongue 44. Spaced apart left and right side members 46 and 48 are attached to the underside of the base 42. As best seen in Fig. 5, the base 42 forms a downwardly opening socket 50 which releasably receives the hitch ball 24. As a result, the drawbar 22 is operable to pull the implement coupler 16 towards the tractor coupler 14. As best seen in Fig. 4, a left jack stand member 52 is movably attached to the left side of the left side member 46, and a right jack stand member 54 is movably attached to the right side of the right side member 48.

The following description pertains to the left jack stand member 52 and its supporting bolts or pins. The corresponding right side structure, including right jack stand member 54, is not described further since it is a mirror image of the left side structure. A first or front support bolt 56 projects from a front portion of the left side of the left side member 46. A second or rear support bolt 58 projects from a rear portion of the left side of the left side member 46. The front support bolt 56 is spaced apart forwardly from the rear support bolt 58.

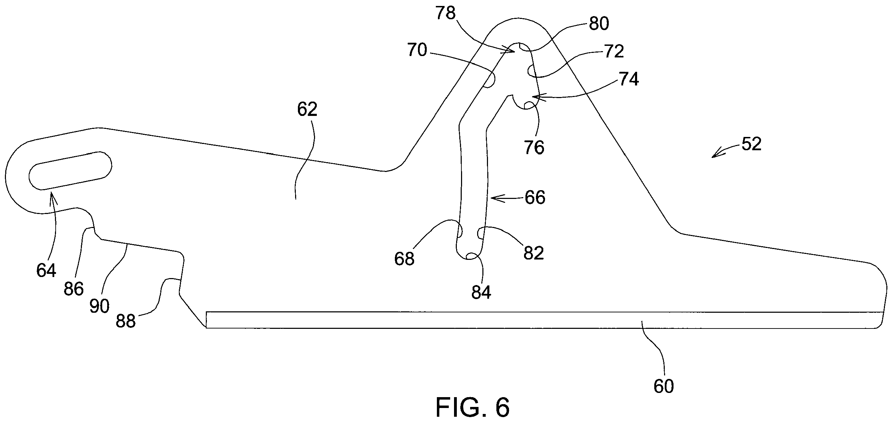

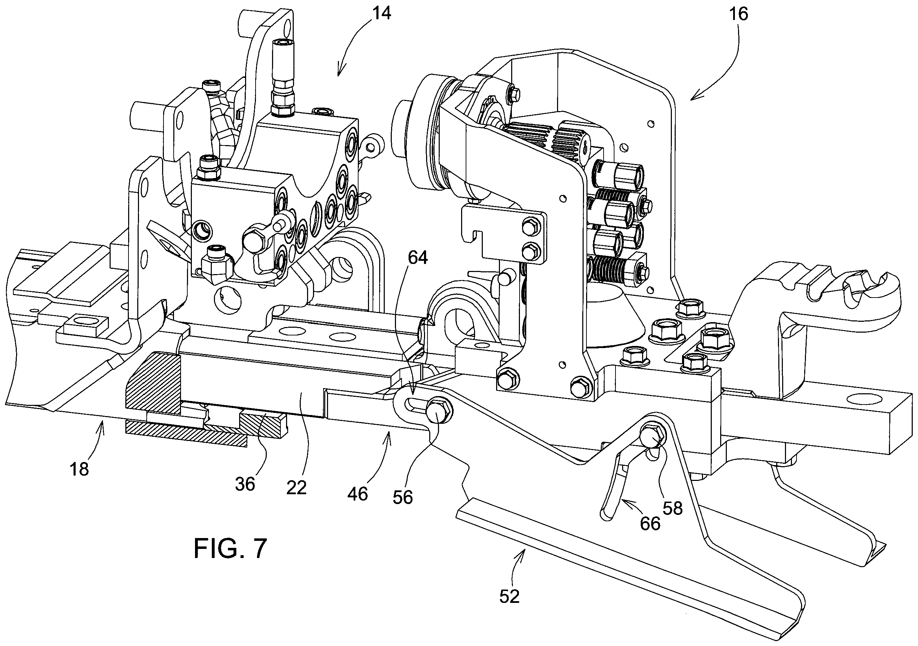

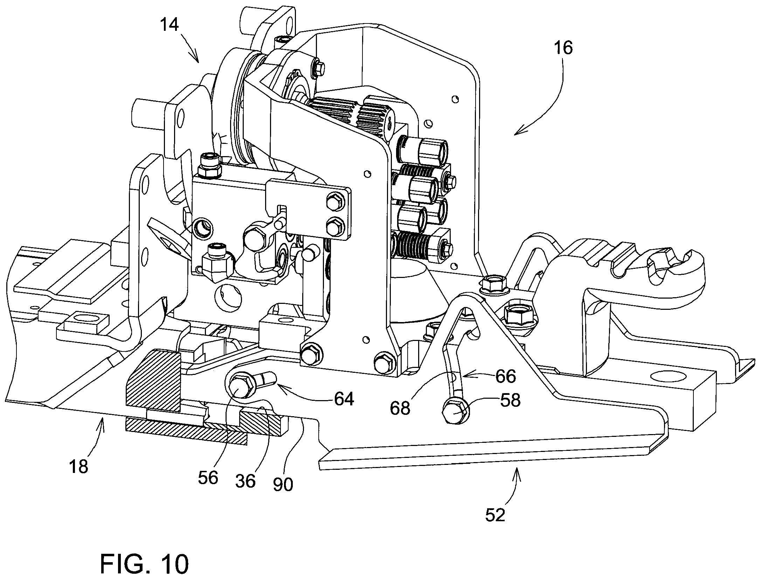

Referring to Figs. 4, 6 and 7, the left jack stand member 52 is mounted on the front and rear support bolts 56 and 58. The left jack stand member 52 includes a base plate 60 and a side plate 62 which projects vertically upwardly from and edge of the base plate 60. The side plate 62 includes a first or forward slot 64 and a second or rear slot 66. Forward slot 64 slidably and rotatably receives the front support bolt 56 and the rear slot 66 slidably and rotatably receives the rear support bolt 58. The forward slot 64 is elongated in a generally fore-and-aft direction. The rear slot 66 includes a first slot portion 68, a second slot portion 70 and a third slot portion 72 (see Fig. 6). The second slot portion 70 joins the first slot portion 68 to the third slot portion 72. A lower end 74 of the third slot portion 72 forms a first shoulder 76 which is engagable with the rear support bolt 58 to releasably hold the left jack stand member 52 in a lowered position (see Fig. 7) with respect to the implement coupler 16, and to hold the implement coupler 16 above the ground when it is not being supported by the pickup hitch 12, as best seen in Fig. 4. An upper end 78 of the third slot portion 72 forms a second shoulder 80 which is engagable with the rear support bolt 58 when the left jack stand member 52 is supported by the rear support bolt 58. A lower end 82 of the first slot portion 68 forms a third shoulder 84 which is engagable with the rear support bolt 58 when the left jack stand member 52 is in a fully raised position (see Fig. 10).

The first slot portion 68 extends generally upwardly away from lower end 82 and away from base plate 60. The first slot portion 68 is curved and is concave in a direction towards the forward slot 64. The first slot portion 68 has a radius of curvature which is centered about the front support bolt 56 when the front support bolt 56 is positioned at the front end of forward slot 64 (see Fig. 10). The second slot portion 70 extends linearly upwardly and rearwardly away from an upper end of the first slot portion 68. The third slot portion 72 extends generally downwardly and slightly rearwardly from an upper end of the second slot portion 70. The third slot portion 72 is shaped and positioned so that the third slot portion 72 can slide with respect to the rear support bolt 58 and so that left jack stand member 52 can rotate (counter clockwise viewing Fig. 4) about the front support bolt 56 when the front support bolt 56 is at the rear end of the forward slot 64.

Referring to Fig. 6, the left jack stand member 52 forms a first forward facing shoulder 86 and a second forward facing shoulder 88 separated and joined together by a downward facing edge 90.

Referring now to Fig. 7, before the implement coupler 16 is moved towards the tractor coupler 14, the right stop block 36 is spaced apart from the left jack stand member 52, and the left jack stand member 52 is in its lowered position.

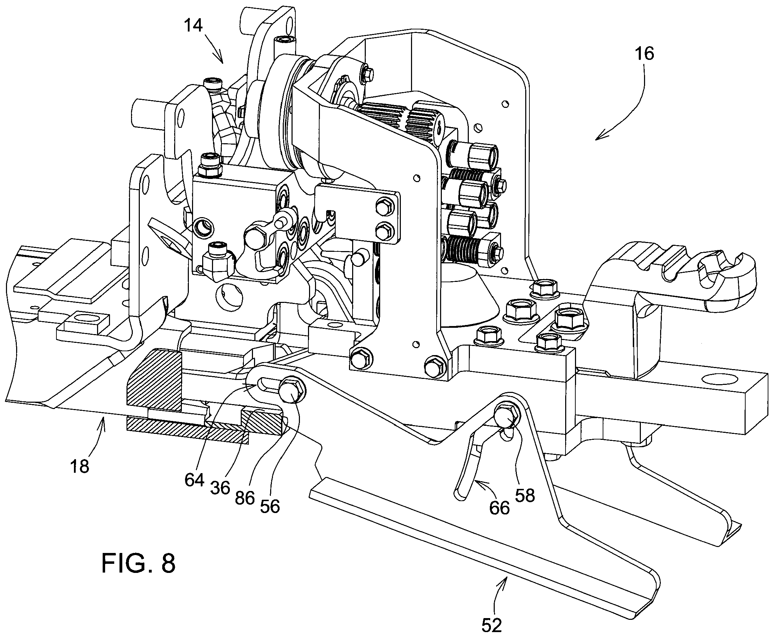

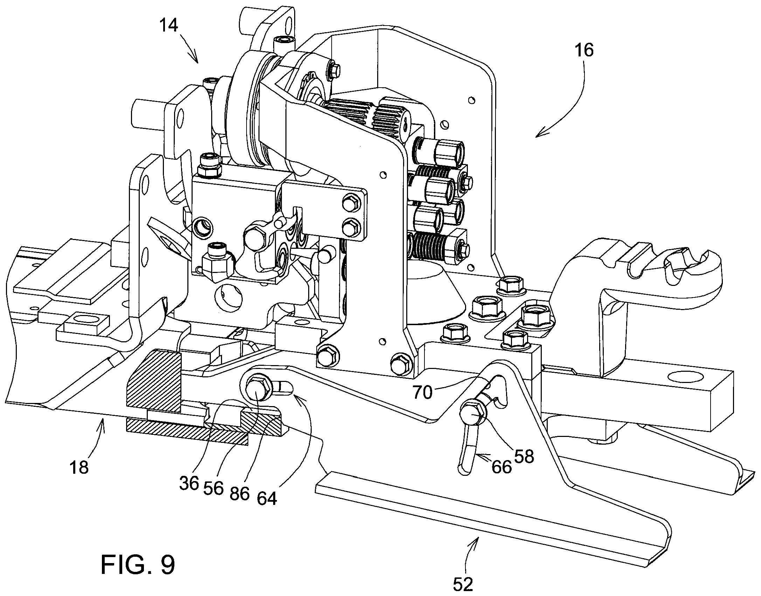

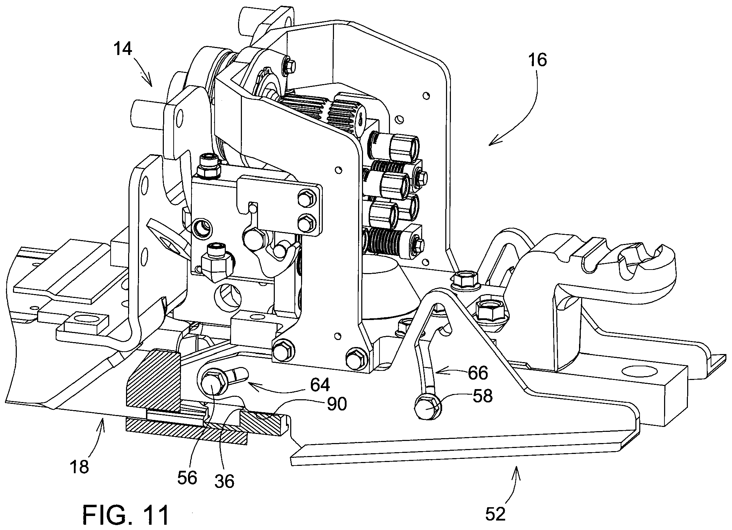

Referring now to Fig. 8, as the implement coupler 16 is pulled towards the tractor coupler 14, the right stop block 36 engages the first forward facing shoulder 86 and pivots the left jack stand member 52 upwardly about front support bolt 56. Referring now to Fig. 9, as the implement coupler 16 is pulled further towards the tractor coupler 14, the right stop block 36 engages first forward facing shoulder 86 and shifts the left jack stand member 52 rearward with respect to front support bolt 56 and the rear portion of jack stand member 52 moves upwardly so that the rear support bolt 58 is at the bottom end of second slot portion 70. Referring now to Fig. 10, as the implement coupler 16 is pulled further towards the tractor coupler 14, the left jack stand member 52 is moved to its fully raised position wherein rear support bolt 58 engages the third shoulder 84 at the bottom end of first slot portion 68, and the right stop block 36 begins to engage the downward facing edge 90 of the left jack stand member 52. Referring now to Fig. 11, as the implement coupler 16 is pulled further towards the tractor coupler 14, the left jack stand member 52 remains in its fully raised position, and the right stop block 36 more fully engages the rearward facing edge 90 to hold the left jack stand member 52 in its fully raised position.

The result is a coupler assembly 10 with a jack stand mechanism which can be used with a tractor-implement auto-connect coupler assembly which allows an operator to connect a tractor to an implement without leaving the cab. The left and right jack stand members 52 and 54 support the implement and allow the hitch ball 24 of the pickup hitch 12 to connect to the implement coupler 16. When the pickup hitch 12 pulls the implement coupler 16 to the tractor, the left and right jack stand members 52 and 54 contact left and right stop blocks 34 and 36 on the pickup hitch 12 that push the left and right jack stand members 52 and 54 back and up to maintain tractor ground clearance. The left and right jack stand members 52 and 54 have machined slots 64 and 66 that ride on support bolts 56 and 58 on the implement coupler 16. When the implement coupler 16 is pushed away from the tractor, the left and right jack stand members 52 and 54 drop down from their own weight. When the pickup hitch 12 drops the implement coupler 16 to the ground the left and right jack stand members 52 and 54 are locked in a notch formed by first shoulder 76 at lower end 74 of third slot portion 72 to support the implement.

## Claims

1. A coupler assembly for coupling an implement to a vehicle, the coupler assembly (10) comprising a pickup hitch (12) with an hollow inner housing (20) which is pivotal about a horizontal axis and a drawbar (22) which is slidably received in the hollow inner housing (20); an implement coupler (16) with a coupler frame (40) adapted to be attached to the implement; a jack stand member (52, 54) movably mounted on the coupler frame (40), and a stop block (34, 36) mounted to the pickup hitch (12), the stop block (34, 36) engaging a first forward facing shoulder (86) of the jack stand member (52, 54) to raise the jack stand member (52, 54) from a ground engaging lowered position when the coupler frame (40) is moved towards the vehicle, the stop block (34, 36) being spaced apart from the jack stand member (52, 54) to allow the jack stand member (52, 54) to fall to its lowered position when the coupler frame (40) is moved away from the vehicle into an uncoupled position, the jack stand member (52, 54) in its lowered position releasably supporting the coupler frame (40) in a raised position above the ground, **characterized in that** the first and second support bolts (56, 58) project from a side of the coupler frame (40), the first support bolt (56) being spaced apart forwardly from the second support bolt (58), and the jack stand member (52, 54) having a first slot (64) which slidably and rotatably receives the first support bolt (56) and a second slot (66) which slidably receives the second support bolt (58), the jack stand member (52, 54) being pivotal about the first support pin (56).

2. The coupler assembly according to claim 1, **characterized in that** a first portion (68) of the second slot (66) has a radius of curvature which is centered about the first bolt (56) when the first bolt (56) is positioned at a front end of first slot (64).

3. The coupler assembly according to claim 1 or 2, **characterized in that** a second slot portion (70) of the second slot (66) extends upwardly and rearwardly from an upper end of a first slot portion (68).

4. The coupler assembly according to one of claims 1 to 3, **characterized in that** a third slot portion (72) of the second slot (66) extends downwardly and rearwardly from an upper end of a second slot portion (70) when the jack stand member (52, 54) is in its raised position.

5. The coupler assembly according to one of claims 1 to 4, **characterized in that** the first slot (56) extends generally towards and away from the second slot (58).

6. The coupler assembly according to one of claims 1 to 5, **characterized in that** the stop block (34, 36) engages a downward facing edge (90) of the jack stand member (52, 54) to support the jack stand member (52, 54) in a raised position when the coupler frame (40) is in a coupled position.

7. The coupler assembly according to claim 6, **characterized in that** the first forward facing shoulder (88) faces towards the vehicle, and the downward facing edge (90) faces towards the ground.

8. The coupler assembly according to one of claims 1 to 7, **characterized in that** the jack stand member (52, 54) comprises a left jack stand member (52) mounted to a left side of the coupler frame (40) and a right jack stand member (54) mounted to a right side of the coupler frame (40).

9. The coupler assembly according to one of claims 1 to 5, **characterized in that** the second slot (66) forms a first shoulder (76) which is engagable with the second support bolt (58) to releasably hold the coupler frame (40) raised above the ground.

10. The coupler assembly according to claim 9, **characterized in that** the second slot (66) forms a second shoulder (80) which is engagable with the second support bolt (58) when the jack stand member (52, 54) is in a raised position.

11. The coupler assembly according to one of claims 1 to 10, **characterized in that** the jack stand member (52, 54) comprises a base plate (60) and a side plate (62) which is joined to an edge of the base plate (60).

12. The coupler assembly according to claim 1, **characterized in that** the jack stand member (52, 54) comprises a base plate (60) and a side plate (62) which is joined to an edge of the base plate (60), the first and second slots (64, 66) being formed in the side plate (62).

## Patentansprüche

1. Kupplungsanordnung zur Befestigung eines Gerätes an einem Fahrzeug, wobei die Kupplungsanordnung (10) Folgendes umfasst: eine Hubkupplung (12) mit einem hohlen inneren Gehäuse (20), das um eine horizontale Achse drehbar ist, und eine Zugstange (22), die in dem hohlen Innengehäuse (20) verschiebbar aufgenommen ist; eine Gerätekupplung (16) mit einem Kupplungsrahmen (40), dazu ausgelegt, an dem Gerät befestigt zu werden; ein Stützbockelement (52, 54), das bewegbar an dem Kupplungsrahmen (40) montiert ist, und einen Anschlagblock (34, 36), der an der Hubkupplung (12) montiert ist, wobei der Anschlagblock (34, 36) in eine erste vorwärtsgewandte Schulter (86) des Stützbockelements (52, 54) eingreift, um das Stützbockelement (52, 54) von einer in den Boden eingreifenden abgesenkten Position anzuheben, wenn der Kupplungsrahmen (40) in Richtung des Fahrzeugs bewegt wird, wobei der Anschlagblock (34, 36) von dem Stützbockelement (52, 54) beabstandet ist, um dem Stützbockelement (52, 54) zu gestatten, in seine abgesenkte Position zu fallen, wenn der Kupplungsrahmen (40) von dem Fahrzeug in eine entkuppelte Position wegbewegt wird, wobei das Stützbockelement (52, 54) in seiner abgesenkten Position den Kupplungsrahmen (40) in einer angehobenen Position über dem Boden lösbar stützt, **dadurch gekennzeichnet, dass** die erste und zweite Stützschraube (56, 58) von einer Seite des Kupplungsrahmens (40) vorstehen, wobei die erste Stützschraube (56) von der zweiten Stützschraube (58) vorwärts beabstandet ist, und das Stützbockelement (52, 54) einen ersten Schlitz (64) aufweist, der die erste Stützschraube (56) verschiebbar und drehbar aufnimmt, und einen zweiten Schlitz (66), der die zweite Stützschraube (58) verschiebbar aufnimmt, wobei das Stützbockelement (52, 54) um den ersten Stützbolzen (56) drehbar ist.

2. Kupplungsanordnung nach Anspruch 1, **dadurch gekennzeichnet, dass** ein erster Abschnitt (68) des zweiten Schlitzes (66) einen Wölbungsradius aufweist, der über der ersten Schraube (56) zentriert ist, wobei die erste Schraube (56) an einem vorderen Ende des ersten Schlitzes (64) positioniert ist.

3. Kupplungsanordnung nach Anspruch 1 oder 2, **dadurch gekennzeichnet, dass** sich ein zweiter Schlitzabschnitt (70) des zweiten Schlitzes (66) von einem oberen Ende eines ersten Schlitzabschnitts (68) nach oben und hinten erstreckt.

4. Kupplungsanordnung nach einem der Ansprüche 1 bis 3, **dadurch gekennzeichnet, dass** sich ein dritter Schlitzabschnitt (72) des zweiten Schlitzes (66) von einem oberen Ende eines zweiten Schlitzabschnittes (70) nach unten und hinten erstreckt, wenn sich das Stützbockelement (52, 54) in seiner angehobenen Position befindet.

5. Kupplungsanordnung nach einem der Ansprüche 1 bis 4, **dadurch gekennzeichnet, dass** sich der erste Schlitz (56) allgemein auf den zweiten Schlitz (58) zu und von ihm weg erstreckt.

6. Kupplungsanordnung nach einem der Ansprüche 1 bis 5, **dadurch gekennzeichnet, dass** der Anschlagblock (34, 36) in eine nach unten gerichtete Kante (90) des Stückbockelements (52, 54) eingreift, um das Stützbockelement (52, 54) in einer angehobenen Position zu stützen, wenn sich der Kupplungsrahmen (40) in einer gekuppelten Position befindet.

7. Kupplungsanordnung nach Anspruch 6, **dadurch gekennzeichnet, dass** die erste vorwärts gewandte Schulter (88) dem Fahrzeug zugewandt ist und die nach unten gewandte Kante (90) dem Boden zugewandt ist.

8. Kupplungsanordnung nach einem der Ansprüche 1 bis 7, **dadurch gekennzeichnet, dass** das Stützbockelement (52, 54) ein linkes Stützbockelement (52) umfasst, das an einer linken Seite des Kupplungsrahmens (40) montiert ist, und ein rechtes Stützbockelement (54), das an einer rechten Seite des Kupplungsrahmens (40) montiert ist.

9. Kupplungsordnung nach einem der Ansprüche 1 bis 5, **dadurch gekennzeichnet, dass** der zweite Schlitz (66) eine erste Schulter (76) ausbildet, die mit der zweiten Stützschraube (58) eingreifbar ist, um den Kupplungsrahmen (40) angehoben über dem Boden lösbar zu halten.

10. Kupplungsanordnung nach Anspruch 9, **dadurch gekennzeichnet, dass** der zweite Schlitz (66) eine zweite Schulter (80) ausbildet, die mit der zweiten Stützschraube (58) eingreifbar ist, wenn sich das Stützbockelement (52, 54) in einer angehobenen Position befindet.

11. Kupplungsanordnung nach einem der Ansprüche 1 bis 10, **dadurch gekennzeichnet, dass** das Stützbockelement (52, 54) eine Basisplatte (60) und eine Seitenplatte (62) umfasst, die mit einer Kante der Basisplatte (60) verbunden ist.

12. Kupplungsanordnung nach Anspruch 1, **dadurch gekennzeichnet, dass** das Stützbockelement (52, 54) eine Basisplatte (60) und eine Seitenplatte (62) umfasst, die mit einer Kante der Basisplatte (60) verbunden ist, wobei in der Seitenplatte (62) der erste und zweite Schlitz (64, 66) ausgebildet sind.

## Revendications

1. Ensemble coupleur destiné à coupler un outil sur un véhicule, l'ensemble coupleur (10) comprenant un crochet de ramassage (12) avec un boîtier intérieur creux (20) qui est pivotant autour d'un axe horizontal et un timon (22) qui est reçu de façon coulissante dans le boîtier intérieur creux (20) ; un coupleur pour outil (16) avec un cadre coupleur (40) conçu pour être fixé à l'outil ; un élément de support de vérin (52, 54) monté mobile sur le cadre coupleur (40), et un bloc de butée (34, 36) monté sur le crochet de ramassage (12), le bloc de butée (34, 36) venant en prise avec un premier épaulement orienté vers l'avant (86) de l'élément de support de vérin (52, 54) pour soulever l'élément de support de vérin (52, 54) d'une position abaissée de prise avec le sol lorsque le cadre coupleur (40) est déplacé vers le véhicule, le bloc de butée (34, 36) étant espacé de l'élément de support de vérin (52, 54) pour permettre à l'élément de support de vérin (52, 54) de tomber à sa position abaissée lorsque le cadre coupleur (40) est éloigné du véhicule dans une position désaccouplée, l'élément de support de vérin (52, 54) dans sa position abaissée soutenant de façon amovible le cadre coupleur (40) dans une position élevée au-dessus du sol,
**caractérisé en ce que** des premier et second boulons de support (56, 58) font saillie d'un côté du cadre coupleur (40), le premier boulon de support (56) étant espacé vers l'avant du second boulon de support (58), et l'élément de support de vérin (52, 54) ayant une première fente (64) qui reçoit de façon coulissante et rotative le premier boulon de support (56) et une seconde fente (66) qui reçoit de façon coulissante le second boulon de support (58), l'élément de support de vérin (52, 54) étant pivotant autour de la première broche de support (56) .

2. Ensemble coupleur selon la revendication 1, **caractérisé en ce qu'**une première partie (68) de la seconde fente (66) a un rayon de courbure qui est centré autour du premier boulon (56) lorsque le premier boulon (56) est positionné à une extrémité avant de la première fente (64).

3. Ensemble coupleur selon la revendication 1 ou 2, **caractérisé en ce qu'**une deuxième partie fente (70) de la seconde fente (66) s'étend vers le haut et vers l'arrière à partir d'une extrémité supérieure d'une première partie fente (68).

4. Ensemble coupleur selon l'une des revendications 1 à 3, **caractérisé en ce qu'**une troisième partie fente (72) de la seconde fente (66) s'étend vers le bas et s'étend vers l'arrière à partir d'une extrémité supérieure d'une deuxième partie fente (70) lorsque l'élément de support de vérin (52, 54) est dans sa position élevée.

5. Ensemble coupleur selon l'une des revendications 1 à 4, **caractérisé en ce que** la première fente (56) s'étend généralement vers et à l'opposé de la seconde fente (58).

6. Ensemble coupleur selon l'une des revendications 1 à 5, **caractérisé en ce que** le bloc de butée (34, 36) vient en prise avec un bord orienté vers le bas (90) de l'élément de support de vérin (52, 54) pour supporter l'élément de support de vérin (52, 54) dans une position élevée lorsque le cadre coupleur (40) est dans une position couplée.

7. Ensemble coupleur selon la revendication 6, **caractérisé en ce que** le premier épaulement orienté vers l'avant (88) est orienté vers le véhicule, et le bord orienté vers le bas (90) est orienté vers le sol.

8. Ensemble coupleur selon l'une des revendications 1 à 7, **caractérisé en ce que** l'élément de support de vérin (52, 54) comprend un élément de support de vérin gauche (52) monté sur un côté gauche du cadre coupleur (40) et un élément de support de vérin droit (54) monté sur un côté droit du cadre coupleur (40).

9. Ensemble coupleur selon l'une des revendications 1 à 5, **caractérisé en ce que** la seconde fente (66) forme un premier épaulement (76) qui peut venir en prise avec le second boulon de support (58) pour maintenir de façon amovible le cadre coupleur (40) élevé au-dessus du sol.

10. Ensemble coupleur selon la revendication 9, **caractérisé en ce que** la seconde fente (66) forme un second épaulement (80) qui peut venir en prise avec le second boulon de support (58) lorsque l'élément de support de vérin (52, 54) est dans une position élevée.

11. Ensemble coupleur selon l'une des revendications 1 à 10, **caractérisé en ce que** l'élément de support de vérin (52, 54) comprend une plaque de base (60) et une plaque latérale (62) qui est reliée à un bord de la plaque de base (60).

12. Ensemble coupleur selon la revendication 1, **caractérisé en ce que** l'élément de support de vérin (52, 54) comprend une plaque de base (60) et une plaque latérale (62) qui est reliée à un bord de la plaque de base (60), les première et seconde fentes (64, 66) étant formées dans la plaque latérale (62).
